# EUROPÄISCHE PATENTSCHRIFT

(11) **EP 3 908 751 B1**
(45) Veröffentlichungstag und Bekanntmachung des Hinweises auf die Patenterteilung: **23.08.2023**
(21) Anmeldenummer: 19839329.0
(22) Anmeldetag: 28.12.2019
(51) Int. Cl.: F03G 7/06

(54) **FORMGEDÄCHTNISAKTUATORANORDNUNG UND MONTAGEVERFAHREN**
SHAPE-MEMORY ACTUATOR ASSEMBLY AND ASSEMBLY METHOD
SYSTÈME D'ACTIONNEMENT À MÉMOIRE DE FORME ET PROCÉDÉ DE MONTAGE

(30) Priorität: 11.01.2019 DE 102019100694
(43) Veröffentlichungstag der Anmeldung: 17.11.2021
(73) Patentinhaber: Chr. Mayr GmbH + Co. KG, 87665 Mauerstetten (DE)
(72) Erfinder: MÜLLER, Alexander, 87600 Kaufbeuren (DE); REICHLE, Martin, 87757 Kirchheim (DE); KASTL, Martin, 86862 Lamerdingen (DE)
(74) Vertreter: Haverkamp Patentanwälte PartG mbB
(86) Internationale Anmeldenummer: PCT/DE2019/101113
(87) Internationale Veröffentlichungsnummer: WO 2020/143869

(56) Entgegenhaltungen:
- DE-A1-102012 202 401
- DE-B4- 19 730 383
- US-A1- 2001 038 082
- US-A1- 2004 261 411

## Beschreibung

Die Erfindung betrifft eine Formgedächtnisaktuatoranordnung mit den oberbegrifflichen Merkmalen von Anspruch 1 sowie ein Montageverfahren zur Herstellung einer Formgedächtnisaktuatoranordnung.

Aktoren mit Formgedächtnismaterialien, die eine Hochtemperaturphase (Austenit) und eine Niedrigtemperaturphase (Martensit) aufweisen, sind bekannt und zeichnen sich durch ein hohes spezifisches Arbeitsvermögen sowie eine hohe Lastzyklenanzahl aus. Als Werkstoffe für Formgedächtnisaktoren werden typischerweise Nickel-Titan-Legierungen und Nickel-Titan-Kupfer-Legierungen verwendet. Des Weiteren sind Formgedächtnismaterialien auf der Basis von CuZn, CuZnAl, CuAlNi, TiNiAl, FeMnSi und ZnAuCu sowie Formgedächtnispolymere bekannt.

Zur Aktivierung eines Formgedächtnisaktors muss dieser über die Phasenumwandlungstemperatur erwärmt werden. Dies kann durch die Zufuhr eines Heizmediums erfolgen. Alternativ wird die Temperaturänderung durch eine Bestromung erzielt. Wesentlich ist dabei eine homogene Temperaturführung im Material, sodass typischerweise dünnwandige, längliche Strukturen, wie Drähte aus Formgedächtnismaterial oder Bänder, verwendet werden. Diese bieten aufgrund des hohen Oberflächen-Volumenverhältnisses den Vorteil einer schnellen Abkühlung, sodass insgesamt der Temperaturzyklus mit hoher Geschwindigkeit durchlaufen werden kann und somit schnell nacheinander erfolgende Aktorstellbewegungen möglich werden.

Um die Vorteile von Drähten oder Bändern aus Formgedächtnismaterial auch für Anwendungen, die höhere Stellkräfte erfordern, ausnutzen zu können, ist die Anwendung von Geflechten oder Geweben aus Formgedächtnisdrähten bekannt. Hierzu wird beispielhaft auf US 2001/0038082 A1, US 2004/0261411 A1 und

DE 4307593 C1 verwiesen. Ferner wurde durch DE 102011112966 A1 und DE 102011112965 A1 die Herstellung einer Gitterstruktur in Form von Maschen oder Webware aus einem Formgedächtnisdraht zur Ausbildung eines kombinierten Aktors vorgeschlagen. Des Weiteren ist die Einbringung von Formgedächtnismaterialien in Funktionstextilien oder allgemein dehnbare Materialien bekannt. Beispielhaft wird auf EP 1850359 B1, EP 0364869 B1, EP 1644564 B1, WO 2005050409 A2, EP 2136858 B1 und WO 2011066224 A2 verwiesen.

Für Formgedächtnisaktoren führt das Einbetten des Formgedächtnismaterials in ein Gestrick, Gewebe oder Komposit zu einer Verringerung der Kraftdichte sowie einer Reduktion der Anzahl der möglichen Lastzyklen. Dieser Nachteil ergibt sich auch für die voranstehend beschriebenen, gemaschten oder in Form von Gittern aus Einzeldrähten angelegten Formgedächtnisaktoren. Für diese tritt bei einer Aktivierung durch Bestromung die zusätzliche Schwierigkeit auf, dass bei der Verwendung thermisch vorteilhafter, nicht elektrisch isolierter Formgedächtnislegierungen an den Knotenpunkten eine Vielzahl elektrischer Verbindungsstellen auftreten, die zu einem undefinierten Stromfluss und damit unter Umständen zu einer inhomogenen Erwärmung des gesamten Formgedächtnisaktors führen. Daher werden für Formgedächtnisaktoranordnungen mehrere parallel und ohne Nachbarberührung verlaufende Stellglieder aus einem Formgedächtnismaterial bevorzugt. Beispielhaft wird auf US 5186420 A und EP 1557563 A1 verwiesen. Ferner schlägt DE 19529712 C2 vor, für eine derartige Anordnung mit mehreren parallel verlaufenden Stellgliedern ein einteiliges Formgedächtniselement in Form eines Drahtes zu verwenden und dieses mehrfach um mindestens zwei Umlenkkörper zu wickeln. Dabei weisen die Umlenkkörper an dem für die Drahtberührung vorgesehenen Bereich eine Nutanordnung auf, die für die Montage ein präzises Wickeln zum Einführen des Drahts mit einer hinreichenden Zugspannung voraussetzt. Entsprechend offenbart DE 19730383 B4 helikale Führungsnuten an einem zylindrischen Umlenkkörper, die durch einen Gangversatz in Axialrichtung beim Umwickeln des Umlenkkörpers eine Parallelführung der Stellglieder im anschließenden Freilaufbereich ermöglichen. Derartig formschlüssig angelegte Aufnahmen am Umlenkkörper setzen eine präzise Drahtführung bei der Montage voraus, die vielfach nur durch aufwendige Handarbeit bewerkstelligt werden kann.

Ferner schlägt die voranstehend genannte DE 19730383 B4 vor, die Anordnung aus Umlenkkörpern und Formgedächtnisdraht als einteilig zu handhabende Baueinheit anzulegen, die ein Training des Formgedächtnisdrahts unter Berücksichtigung des späteren Benutzungszustands ermöglicht. Allerdings setzen die formschlüssig und halbseitig offen angelegten Drahtaufnahmen an den Umlenkkörpern voraus, dass ständig ein nach außen gerichteter Zug auf die Umlenkkörper aufrechterhalten wird, der den Formgedächtnisdraht permanent unter Spannung hält. Dies erfordert ein zusätzliches Spannelement, das die Komplexität und den Handhabungsaufwand der Anordnung erhöht.

Für eine sichere mechanische und elektrische Kontaktierung von Formgedächtnisaktordrähten werden typischerweise Crimpverbindungen verwendet. Als Alternative schlägt DE 29918467 U1 für Nickel-Titan-Formgedächtnisaktordrähte vor, eine Kupferschicht auf die Drahtenden auf elektrochemischem Weg aufzubringen und diese durch Löten mit einer Drahtaufnahme aus Kupfer stoffschlüssig zu verbinden. Ein weiteres stoffschlüssiges Kontaktverfahren wird durch DE 29918467 U1 beschrieben. Mittels Laserschweißen werden an Enden eines Nickel-Titan-Formgedächtnisaktordrahts Verbindungsstellen aus Messing geschaffen, wobei der thermische Eintrag in den Draht so lokalisiert werden kann, dass der Formgedächtniseffekt über die wesentliche Drahterstreckung erhalten bleibt. Des Weiteren beschreibt DE 10205760 A1 die Schaffung von Drahtendverbindungen für metallische Formgedächtniselemente mittels eines Kunststoffmaterials mit hoher thermischer und elektrischer Leitfähigkeit. Für die Montage einer Anordnung mit mehreren parallelen Stellgliedern ist eine örtlich präzise Befestigung einer Vielzahl von Formgedächtnisaktordrähten übereinstimmender Länge an einer zur Übertragung der Aktorkräfte geeigneten Halterung notwendig, sodass die voranstehend genannten Drahtendverbindungen zu einem großen Montageaufwand führen.

Der Erfindung liegt die Aufgabe zugrunde, eine Formgedächtnisaktuatoranordnung mit einer Vielzahl einander nicht berührender, parallel verlaufender Stellelemente anzugeben, die eine als Ganzes handhabbare, kompakte Baueinheit zur Bereitstellung hoher Aktorkräfte bildet. Des Weiteren ist ein Montageverfahren zur Herstellung einer solchen Formgedächtnisanordnung anzugeben, das einen hohen Automatisierungsgrad erlaubt.

Ausgangspunkt der Erfindung ist eine Formgedächtnisaktuatoranordnung mit einem drahtförmigen Formgedächtniselement, einem ersten Umlenkkörper und einem zweiten Umlenkkörper, wobei der erste und der zweite Umlenkkörper voneinander beabstandet angeordnet sind. Ein drahtförmiges Formgedächtniselement ist mehrfach um den ersten Umlenkkörper und den zweiten Umlenkkörper gewickelt, sodass zwischen diesen eine Stellgliedanordnung vorliegt, die bei einem Erhitzen über die Phasenumwandlungstemperatur als Aktor wirkt.

Erfindungsgemäß sind zumindest ein Drahthalterbereich am jeweiligen Umlenkkörper und die den Drahthalterbereich berührenden Abschnitte des drahtförmigen Formgedächtniselements in eine Vergussmasse eingebettet. Unter dem Drahthalterbereich wird vorliegend der Teil des Umlenkkörpers verstanden, auf den die Ablage des drahtförmigen Formgedächtniselements bei der Umwicklung erfolgt. Durch das Aufbringen der Vergussmasse ist eine verbesserte Automatisierbarkeit der Montage möglich, wobei das drahtförmige Formgedächtniselement in einem ersten Schritt bevorzugt mittels einer Wickelmaschine mehrfach um den ersten Umlenkkörper und den zweiten Umlenkkörper geführt wird, die sich zunächst in einer Einspannvorrichtung befinden. In einem zweiten Schritt erfolgt der Verguss im Bereich der Umlenkkörper zur Sicherung der Drahtanordnung auf den Umlenkkörpern. Neben der verbesserten Handhabbarkeit führt die Vergussmasse aufgrund ihrer Elastizität zu einer Verringerung der Kerbwirkung auf das drahtförmige Formgedächtniselement im Bereich der Umlenkkörper, sodass eine Formgedächtnisaktuatoranordnung mit hoher Standzeit resultiert. Für eine bevorzugte Ausführung liegt ferner an jedem Umlenkkörper ein Drahthalterbereich mit rillenförmigen Drahtaufnahmen vor, die eine gleichmäßige Drahtablage vereinfachen.

Für eine vorteilhafte Weitergestaltung der Formgedächtnisaktuatoranordnung sind dem ersten Umlenkkörper und dem zweiten Umlenkkörper jeweils ein Vergusstopf zugeordnet. Dies erlaubt ein Einlegen der nach dem ersten Montageschritt vorliegenden, drahtumwickelten Umlenkkörper in eine ausgießbare Form, die eine verlorene Schalung bildet. Besonders bevorzugt wird das Material der Vergussmasse so gewählt, dass der Umlenkkörper mit dem jeweils zugeordneten Vergusstopf durch das Ausgießen so sicher mechanisch gekoppelt wird, dass eine vollständige Übertragung der Aktorkräfte über die Vergussmasse möglich ist. Zu diesem Zweck kann als Vergussmasse ein Kompositharz verwendet werden. Des Weiteren ist bevorzugt, dass die Vergussmasse den jeweiligen Umlenkkörper vollständig umschließt, um eine besonders gute mechanische Verbindung zwischen Umlenkkörper und Vergusstopf zu erreichen. Für eine vorteilhafte Ausführung sind zusätzlich am Vergusstopf Befestigungselemente zur Ausleitung von Aktorkräften vorgesehen.

Für eine bevorzugte Ausführung der erfindungsgemäßen Formgedächtnisaktuatoranordnung wird nach dem ersten Montageschritt und vor dem Aufbringen der Vergussmasse ein Klemmstück am Umlenkkörper angebracht, das dazu dient, die Drahtablage für einen Transfer zu sichern. Dazu dient ein Klemmstück, das in Form eines Clips ausgebildet ist, der die den Drahthalterbereich berührenden Abschnitte des drahtförmigen Formgedächtniselements lagefixiert. Nach dem Anbringen der Klemmstücke auf den Umlenkkörpern kann eine Entnahme aus der Wickelmaschine erfolgen und die umwickelten Umlenkkörper können aufrecht in einen Vergusstopf eingestellt werden, der nachfolgend mit der Vergussmasse befüllt wird. Dabei erfolgt der Verguss bevorzugt so, dass das gesamte Klemmstück mit dem Umlenkkörper vollständig in die Vergussmasse eingebettet ist.

Als Alternative zur Verwendung eines Klemmstücks kann auf den Drahthalterbereich und/oder das drahtförmige Formgedächtniselement eine Klebstoffschicht aufgebracht werden, die eine Zwischenfixierung der Wickelanordnung ermöglicht. Dabei kommt insbesondere ein durch Aufschmelzen aktivierbarer Klebstoff infrage, sodass das Anheften gezielt an den Berührungspunkten des drahtförmigen Formgedächtniselements am Drahthalterbereich der Umlenkkörper insbesondere durch ein Aufheizen mittels Bestromung realisiert wird.

Durch die Verwendung der Vergussmasse wird eine Formgedächtnisaktuatoranordnung realisiert, für die auf eine zusätzliche mechanische Sicherung der Drahtenden verzichtet werden kann. Insbesondere besteht keine Notwendigkeit, jede Drahtumwicklung einzeln zu sichern. Gleichwohl besteht die Möglichkeit, das drahtförmige Formgedächtniselement am ersten Umlenkkörper und/oder am zweiten Umlenkkörper durch eine redundante Sicherung zusätzlich kraftschlüssig und/oder formschlüssig und/oder stoffschlüssig zu befestigen. Dies kann beispielsweise durch Laserschweißen erfolgen. Alternativ kann der Endabschnitt des drahtförmigen Formgedächtniselements mehrfach um den Umlenkkörper geführt werden oder dieser wird mit Zug in eine Nutvertiefung mit Untermaß gegenüber dem Drahtdurchmesser eingebracht. Ferner ist es denkbar, die redundante Sicherung des Endabschnitts durch Verkleben oder Crimpen zu realisieren.

Für eine Weiterbildung der Erfindung wird nach der Umwicklung der Umlenkkörper mit dem drahtförmigen Formgedächtniselement und vor dem Verguss ein Ausgleich der Drahtspannung vorgenommen. Zu diesem Zweck kann über die Einspannvorrichtung der Abstand der Umlenkkörper vergrößert werden, sodass ein Zug in der Stellgliedanordnung entsteht. Alternativ erfolgt eine Bestromung zur Aktivierung des drahtförmigen Formgedächtniselements. Beide Maßnahmen führen zu Längenausgleichsbewegungen im Bereich der Drahtumwicklung an den Umlenkkörpern, sodass aktorisch übereinstimmend wirkende Stellglieder resultieren.

Für eine bevorzugte Ausgestaltung der Formgedächtnisaktuatoranordnung werden die mechanisch parallel wirkenden Stellglieder zwischen den Umlenkkörpern durch eine serielle Bestromung angesteuert, um die Treiberschaltung zu vereinfachen. Dies setzt voraus, dass die einzelnen Stellglieder gegeneinander elektrisch isoliert sind und ein gegenüber einer Parallelansteuerung höherer Gesamtwiderstand resultiert. Daher wird eine Ausführung mit einem einen elektrischen Isolator bildenden Drahthalterbereich und einer elektrisch nicht leitfähigen Vergussmasse bevorzugt. Für eine Ausführung mit einer Zwischensicherung der Umwicklung am Umlenkkörper muss das dafür verwendete Klemmstück ebenfalls elektrisch isolierend ausgebildet sein.

Eine Weiterbildung der Erfindung sieht vor, zumindest einen Teilabschnitt der Stellgliedanordnung zwischen dem ersten Umlenkkörper und dem zweiten Umlenkkörper in ein Stellgliedvergusselement einzubetten. Diese Maßnahme vereinfacht die Handhabung der Formgedächtnisaktuatoranordnung, da keine losen Drähte vorliegen und eine wechselseitige Drahtberührung im Betrieb verhindert wird. Dies ist insbesondere für eine elektrisch seriell betriebene Ausführung vorteilhaft. Ferner sorgt die Einbettung der Stellgliedanordnung in ein Stellgliedvergusselement für eine verbesserte Wärmeabführung im zyklischen Betrieb, sodass die Abkühlungszeiten wesentlich verkürzt sind und damit die Schaltfrequenz erhöht werden kann. Das für das Stellgliedvergusselement gewählte Material ist bevorzugt elektrisch isolierend und muss eine so hinreichende Elastizität aufweisen, dass die Aktorfunktion nicht wesentlich beeinflusst wird. Vorteilhaft hat sich ein Stellgliedvergusselement aus Silikon (Polysiloxan) erwiesen.

Für eine mögliche Ausführungsform werden das Stellgliedvergusselement und die Vergussmasse im Bereich der Umlenkkörper in separaten Schritten hergestellt, sodass unterschiedliche Materialen verwendet werden können. Bevorzugt liegt eine stoffschlüssige Verbindung des Stellgliedvergusselements und der Vergussmasse vor, sodass keine Freibereiche am drahtförmigen Formgedächtniselement vorliegen. Denkbar ist auch eine Ausführung aus artgleichem Material für das Stellgliedvergusselement und die Vergussmasse oder ein integraler Verguss in einer Gesamtform mit einem einheitlichen Material.

Nachfolgend wird die Erfindung anhand bevorzugter Ausführungsbeispiele und in Verbindung zu Figurendarstellungen genauer erläutert. Diese zeigen im Einzelnen Folgendes:
- Fig. 1: zeigt eine erfindungsgemäße Formgedächtnisaktuatoranordnung in perspektivischer Ansicht.
- Fig. 2: zeigt eine Explosionsdarstellung der erfindungsgemäßen Formgedächtnisaktuatoranordnung aus Figur 1.
- Fig. 3: zeigt eine Seitenansicht der erfindungsgemäßen Formgedächtnisaktuatoranordnung aus Figur 1.
- Fig. 4: zeigt die Schnittansicht B-B der erfindungsgemäßen Formgedächtnisaktuatoranordnung aus Figur 3.
- Fig. 5: zeigt das Ablaufschema des erfindungsgemäßen Montageverfahrens zur Herstellung einer Formgedächtnisaktuatoranordnung.

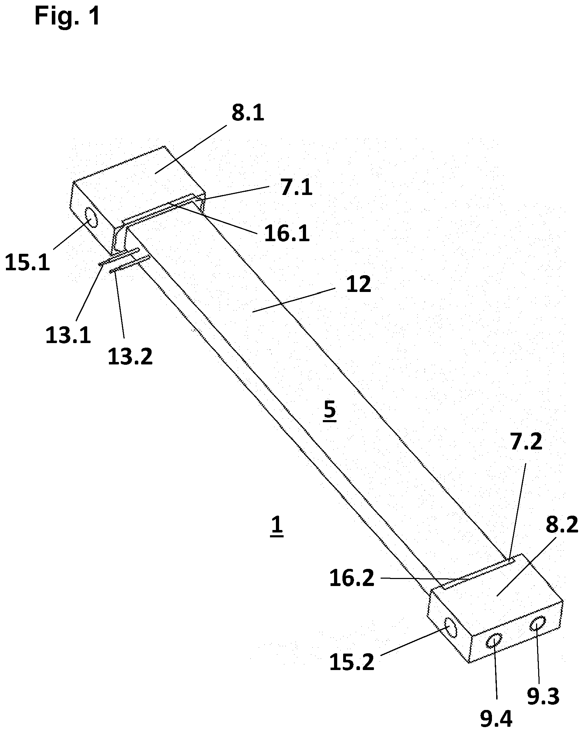

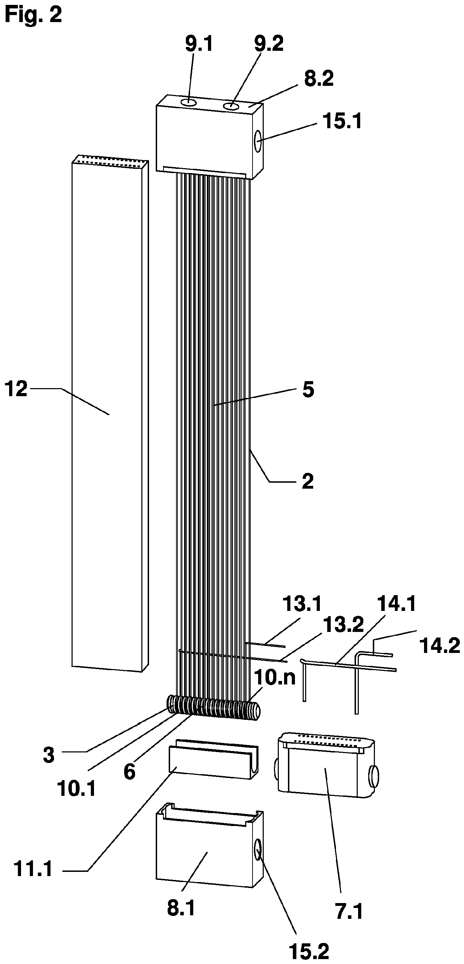

Figur 1 zeigt eine schematisch vereinfachte perspektivische Außenansicht für eine bevorzugte Ausführung der erfindungsgemäßen Formgedächtnisaktuatoranordnung 1. Dargestellt ist ein Stellgliedvergusselement 12 aus Silikon, das, wie durch die Explosionsdarstellung in Figur 2 illustriert, eine Stellgliedanordnung 5 umschließt. Die Stellgliedanordnung 5 wird, wie in Figur 2 gezeigt, durch eine mehrfache Umwicklung einer Anordnung mit einem ersten Umlenkkörper 3 und einem zweiten Umlenkkörper 4, die voneinander beabstandet angeordnet sind, mit einem drahtförmigen Formgedächtniselement 2 gebildet.

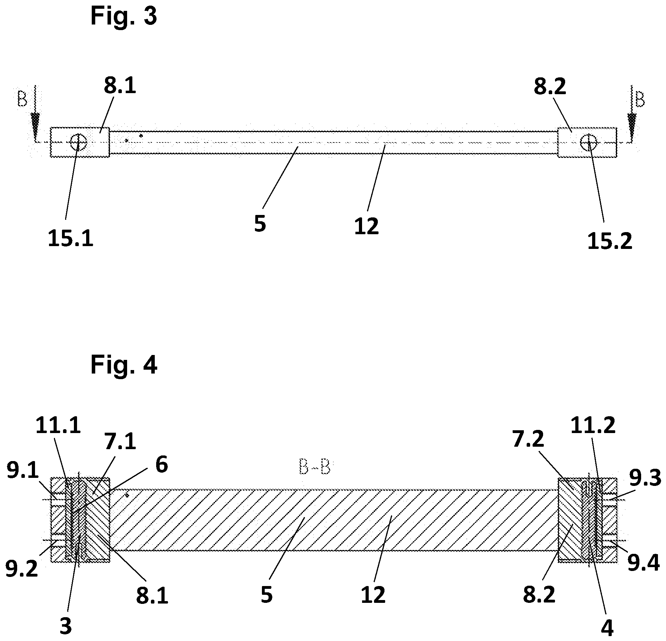

Die insbesondere aus Figur 4 ersichtlichen Umlenkkörper 3, 4 dienen zur Aufnahme der aktorischen Kräfte der Stellgliedanordnung 5, die durch ein Aufheizen des drahtförmigen Formgedächtniselements 2 über die Phasenumwandlungstemperatur mittels Bestromung bewirkt wird.

Für eine bevorzugte Ausführung wird die Stellgliedanordnung 5 seriell bestromt, sodass sich die Wicklungen des drahtförmigen Formgedächtniselements 2 nicht berühren dürfen. Dies wird im Bereich zwischen den Umlenkkörpern 3, 4 durch das Stellgliedvergusselement 12 sichergestellt, wobei dies die zusätzliche Aufgabe erfüllt, Wärme von der Stellgliedanordnung 5 abzuleiten, um einen schnellen zyklischen Betrieb der Formgedächtnisaktuatoranordnung 1 zu ermöglichen.

Des Weiteren ist für die bevorzugte Ausführung zumindest der Drahthalterbereich 6 an den Umlenkkörpern 3, 4 als elektrischer Isolator ausgebildet. Verwendet wird ein keramischer Hohlzylinder mit rillenförmigen Drahtaufnahmen 10.1, 10.2 auf der Mantelfläche, die dazu dienen, das drahtförmige Formgedächtniselement 2 bei der Herstellung der Wickelanordnung mit definierten Lateralabständen auf den Umlenkkörpern 3, 4 abzulegen. Im Innern des keramischen Hohlzylinders befindet sich ein Metallstift als Strukturverstärkung oder die keramische Komponente bildet eine Beschichtung auf einer lasttragenden Metallkomponente. Mögliche Alternativen sind eine vollkeramische Ausführung des Umlenkkörpers 3, 4 oder eine Ausgestaltung aus einem isolierenden Kunststoff, beispielsweise PEEK.

Wie in Figur 2 und durch die in Figur 4 gezeigte Schnittdarstellung B-B dargestellt, ist im Montagezustand der Formgedächtnisaktuatoranordnung 1 ein Klemmstück 11.1, 11.2 auf den Drahthalterbereich 6 nach der Wicklungsablage aufgesteckt, das zur Fixierung der um die Umlenkkörper 3, 4 geführten Abschnitte des drahtförmigen Formgedächtniselements 2 dient. Durch diese Maßnahme kann bei der Montage die Wickelanordnung als zusammenhängende Einheit gehandhabt werden, die für den Vergussschritt in eine Form einzubringen ist. Erfindungsgemäß wird eine Einbettung zumindest des Drahthalterbereichs 6 am jeweiligen Umlenkkörper 3, 4 und der den Drahthalterbereich 6 berührenden Abschnitte des drahtförmigen Formgedächtniselements 2 in eine Vergussmasse 7.1, 7.2 ausgeführt. Für die in den Figuren 1 - 4 dargestellte bevorzugte Ausführung dienen die den Umlenkkörpern 3, 4 zugeordneten Vergusstöpfe 8.1, 8.2 als verlorene Schalungen des Vergussschritts.

Insbesondere aus Figuren 2 und 4 ist ersichtlich, dass die Umlenkkörper 3, 4 mit den darauf aufgesteckten Klemmstücken 11.1, 11.2 nach dem Vergießen vollständig durch die Vergussmasse 7.1, 7.2, bevorzugt einem elektrisch isolierenden Kompositharz oder einem Zweikomponentenkleber oder einem UV-härtbarem Polymer, umschlossen sind. Dadurch ist sichergestellt, dass die den Drahthalterbereich 6 berührenden Abschnitte des drahtförmigen Formgedächtniselements 2 lagefixiert sind. Zusätzlich entsteht eine mechanische Kopplung zwischen den Umlenkkörpern 3, 4 und dem jeweils zugeordneten Vergusstopf 8.1, 8.2, an dem Befestigungselemente 9.1 - 9.4 in Form von Innengewinden zur Ausleitung der Aktorkräfte angeordnet sind.

Zur Sicherstellung einer hinreichend langen elektrischen Isolierstrecke sind an den Vergusstöpfen 8.1, 8.2 im Bereich der Montageposition der Umlenkkörper 3, 4 seitliche Ausnehmungen 15.1, 15.2 angeordnet, die durch die Vergussmasse 7.1, 7.2 ausgefüllt werden. Dem gleichen Zweck dienen die Ausfräsungen 16.1, 16.2 an den Kanten der Vergusstöpfe 8.1, 8.2.

Für die Stromzufuhr dienen die elektrischen Kontaktierungen 13.1, 13.2, die von den mit Schrumpfschläuchen 14.1, 14.2 überzogenen, aus der Wicklungsanordnung herausgeführten Abschnitten des drahtförmigen Formgedächtniselements 2 gebildet werden. Bevorzugt verlaufen die elektrischen Kontaktierungen 13.1, 13.2 aus dem Vergusstopf 8.1, 8.2 in den Bereich der Stellgliedanordnung 5, sodass auch unter der Wirkung der Aktorkräfte ein Einquetschen an den Wandungen der Vergusstöpfe 8.1, 8.2 sicher verhindert werden kann.

Für eine bevorzugte Ausführung wird die Kraftwirkung der Stellgliedanordnung 5 im aktivierten Zustand vollständig über die Vergussmasse 7.1, 7.2 zum Vergusstopf 8.1, 8.2 übertragen. Ferner wird bevorzugt, die Vergussmasse 7.1, 7,2 und das die Stellgliedanordnung 5 ummantelnde Stellgliedvergusselement 12 als stoffschlüssig verbundenes Element auszubilden.

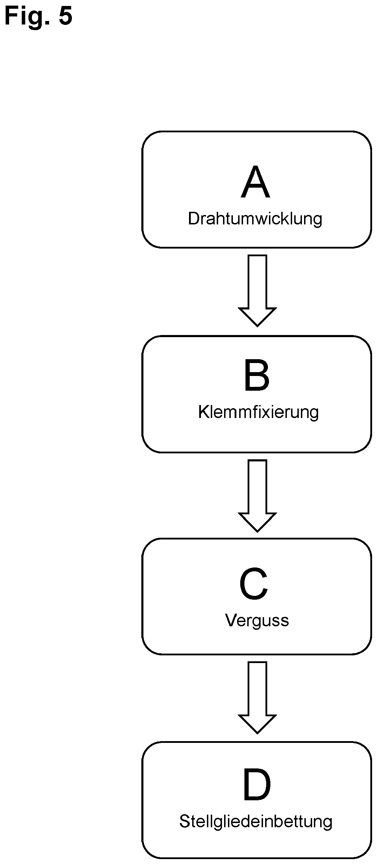

Figur 5 zeigt ein Ablaufschema des erfindungsgemäßen Montageverfahrens zur Herstellung einer Formgedächtnisaktuatoranordnung. Schritt A betrifft die mehrfache Umwicklung einer Anordnung mit einem ersten Umlenkkörper 3 und einem zweiten Umlenkkörper 4 mit einem drahtförmigen Formgedächtniselement zur Ausbildung einer Stellgliedanordnung 5. Schritt B bezeichnet das Aufsetzen eines Klemmstücks 11.1, 11.2 zur Fixierung der den Drahthalterbereich 6 berührenden Abschnitte des drahtförmigen Formgedächtniselements 2 auf den Umlenkkörpern 3, 4. Für Schritt C wird die so gesicherte Wickelanordnung im Bereich der Umlenkkörper 3, 4 in jeweils zugeordnete Vergusstöpfe 8.1, 8.2 eingestellt, die mit einer Vergussmasse 7.1, 7.2 ausgefüllt werden. Schritt D bezeichnet die Stellgliedeinbettung durch Verlagerung in eine zweite Form und die Ausbildung des Stellgliedvergusselements 12 im Bereich der Stellgliedanordnung 5.

Weiter Ausgestaltungen der Erfindung ergeben sich aus den nachfolgenden Schutzansprüchen.

### Bezugszeichenliste

- 1: Formgedächtnisaktuatoranordnung
- 2: drahtförmiges Formgedächtniselement
- 3: erster Umlenkkörper
- 4: zweiter Umlenkkörper
- 5: Stellgliedanordnung
- 6: Drahthalterbereich
- 7.1, 7.2: Vergussmasse
- 8.1, 8.2: Vergusstopf
- 9.1, 9.2 9.3, 9.4: Befestigungselement
- 10.1 - 10.n: rillenförmige Drahtaufnahmen
- 11.1, 11.2: Klemmstück
- 12: Stellgliedvergusselement
- 13.1, 13.2: elektrische Kontaktierung
- 14.1, 14.2: Schrumpfschlauch
- 15.1, 15.2: seitliche Ausnehmung
- 16.1, 16.2: Ausfräsung

## Patentansprüche

1. Formgedächtnisaktuatoranordnung, umfassend
ein drahtförmiges Formgedächtniselement (2);
einen ersten Umlenkkörper (3) und einen zweiten Umlenkkörper (4), die voneinander beabstandet angeordnet sind, wobei das drahtförmige Formgedächtniselement (2) mehrfach um den ersten Umlenkkörper (3) und den zweiten Umlenkkörper (4) gewickelt ist und zwischen diesen eine Stellgliedanordnung (5) bildet; **dadurch gekennzeichnet,**
**dass** zumindest ein Drahthalterbereich (6) am jeweiligen Umlenkkörper (3, 4) und die den Drahthalterbereich (6) berührenden Abschnitte des drahtförmigen Formgedächtniselements (2) in eine Vergussmasse (7.1, 7.2) eingebettet sind.

2. Formgedächtnisaktuatoranordnung nach Anspruch 1, wobei dem ersten Umlenkkörper (3) und dem zweiten Umlenkkörper (4) jeweils ein Vergusstopf (8.1, 8.2) zugeordnet ist, wobei die Vergussmasse (7.1, 7.2) den jeweiligen Umlenkkörper (3, 4) mit dem jeweiligen Vergusstopf (8.1, 8.2) zur Übertragung von Aktorkräften mechanisch koppelt.

3. Formgedächtnisaktuatoranordnung nach mindestens einem der vorausgehenden Ansprüche, wobei die Vergussmasse (7.1, 7.2) ein Kompositharz oder einen Zweikomponentenkleber oder ein UVhärtbares Polymer umfasst.

4. Formgedächtnisaktuatoranordnung nach mindestens einem der vorausgehenden Ansprüche, wobei die Vergussmasse (7.1, 7.2) den jeweiligen Umlenkkörper (3, 4) vollständig umschließt.

5. Formgedächtnisaktuatoranordnung nach Anspruch 2, wobei der Vergusstopf (8.1, 8.2) ein Befestigungselement (9.1, ...,9.4) zur Ausleitung von Aktorkräften umfasst.

6. Formgedächtnisaktuatoranordnung nach mindestens einem der vorausgehenden Ansprüche, wobei der Drahthalterbereich (6) ein elektrischer Isolator ist und/oder die Vergussmasse (7.1, 7.2) elektrisch isolierend ist.

7. Formgedächtnisaktuatoranordnung nach Anspruch 6, wobei der Drahthalterbereich (6) rillenförmige Drahtaufnahmen (10.1,...,10.n) umfasst.

8. Formgedächtnisaktuatoranordnung nach mindestens einem der vorausgehenden Ansprüche, wobei am ersten Umlenkkörper (3) und am zweiten Umlenkkörper (4) jeweils ein in die Vergussmasse (7.1, 7.2) eingebettetes Klemmstück (11.1, 11.2) angeordnet ist, das zur Fixierung der den Drahthalterbereich (6) berührenden Abschnitte des drahtförmigen Formgedächtniselements (2) ausgebildet ist.

9. Formgedächtnisaktuatoranordnung nach Anspruch 8, wobei das Klemmstück (11.1, 11.2) ein elektrischer Isolator ist.

10. Formgedächtnisaktuatoranordnung nach mindestens einem der vorausgehenden Ansprüche, wobei ein Endstück des drahtförmigen Formgedächtniselements (2) mit dem ersten Umlenkkörper (3) oder dem zweiten Umlenkkörper (4) kraftschlüssig und/oder formschlüssig und/oder stoffschlüssig verbunden ist.

11. Formgedächtnisaktuatoranordnung nach mindestens einem der vorausgehenden Ansprüche, wobei wenigstens ein Teilabschnitt der Stellgliedanordnung (5) zwischen dem ersten Umlenkkörper (3) und dem zweiten Umlenkkörper (4) in ein Stellgliedvergusselement (12) eingebettet ist.

12. Montageverfahren zur Herstellung einer Formgedächtnisaktuatoranordnung umfassend die Verfahrensschritte:
mehrfache Umwicklung einer Anordnung mit einem ersten Umlenkkörper (3) und einem zweiten Umlenkkörper (4), die voneinander beabstandet angeordnet sind, mit einem drahtförmigen Formgedächtniselement (2) zur Ausbildung einer Stellgliedanordnung (5); und
Einbettung zumindest eines Drahthalterbereichs (6) am jeweiligen Umlenkkörper (3, 4) und der den Drahthalterbereich (6) berührenden Abschnitte des drahtförmigen Formgedächtniselements (2) in eine Vergussmasse (7.1, 7.2).

13. Montageverfahren nach Anspruch 12, wobei die Einbettung in die Vergussmasse (7.1, 7.2) so erfolgt, dass der Umlenkkörper (3, 4) vollständig von der Vergussmasse (7.1, 7.2) umschlossen wird.

14. Montageverfahren nach einem der Ansprüche 12 oder 13, wobei der erste Umlenkkörper (3) und der zweite Umlenkkörper (4) nach der Umwicklung mit dem drahtförmigen Formgedächtniselement (2) jeweils in einen zugeordneten Vergusstopf (8.1, 8.2) eingebracht werden, der mit der Vergussmasse (7.1, 7.2) ausgefüllt wird, wobei die Vergussmasse (7.1, 7.2) den Umlenkkörper (3, 4) mit dem zugeordneten Vergusstopf (8.1, 8.2) zur Übertragung von Aktorkräften mechanisch koppelt.

15. Montageverfahren nach einem der Ansprüche 12 - 14, wobei auf den ersten Umlenkkörper (3) und den zweiten Umlenkkörper (4) nach der Umwicklung mit dem drahtförmigen Formgedächtniselement (2) und vor der Einbettung in die Vergussmasse (7.1, 7.2) ein Klemmstück (11.1, 11.2) zur Fixierung der den Drahthalterbereich (6) berührenden Abschnitte des drahtförmigen Formgedächtniselements (2) aufgesetzt wird.

16. Montageverfahren nach einem der Ansprüche 12 - 15, wobei wenigstens ein Teilabschnitt der Stellgliedanordnung (5) zwischen dem ersten Umlenkkörper (3) und dem zweiten Umlenkkörper (4) in ein Stellgliedvergusselement (12) eingebettet wird.

## Claims

1. Shape-memory actuator assembly, comprising a wire-type shape-memory element (2); a first deflecting element (3) and a second deflecting element (4), which are arranged spaced apart from one another, wherein the wire-type shape-memory element (2) is wound multiple times around the first deflecting element (3) and the second deflecting element (4), and forms a control element assembly (5) between them; **characterised in that** at least one wire holder region (6) on the respective deflecting element (3, 4) and the sections of the wire-shaped shape-memory element (2) contacting the wire holder region (6) are embedded in a potting compound (7.1, 7.2).

2. Shape-memory actuator assembly according to claim 1, wherein in each case a potting compound pot (8.1, 8.2) is allocated to the first deflecting body (3) and to the second deflecting body (4), wherein the potting compound (7.1, 7.2) mechanically connects the respective deflecting body (3, 4) to the respective potting pot (8.1, 8.2) in order to transfer the actuator forces.

3. Shape-memory actuator assembly according to at least one of the preceding claims, wherein the potting compound (7.1, 7.2) comprises a composite resin or a two-component adhesive or a UV-curing polymer.

4. Shape-memory actuator assembly according to at least one of the preceding claims, wherein the potting compound (7.1, 7.2) entirely surrounds the respective deflecting element (3, 4).

5. Shape-memory actuator assembly according to claim 2, wherein the potting compound pot (8.1, 8.2) comprises a securing element (9.1, ... , 9.4) for the disseminating of actuator assembly forces.

6. Shape-memory actuator assembly according to at least one of the preceding claims, wherein the wire holder region (6) is an electrical isolator and/or the potting compound (7.1, 7.2) is electrically isolating.

7. Shape-memory actuator assembly according to claim 6, wherein the wire holder region (6) comprises groove-shaped wire receivers (10.1, ..., 10.n).

8. Shape-memory actuator assembly according to at least one of the preceding claims, wherein, in each case, a clamping piece (11.1, 11.2), embedded in the potting compound (7.1, 7.2), is arranged at the first deflecting body (3) and at the second deflecting body (4), which is configured for fixing the sections of the wire-type shape-memory element (2) which are in contact with the wire holder region (6).

9. Shape-memory actuator assembly according to claim 8, wherein the clamping piece (11.1, 11.2) is an electrical isolator.

10. Shape-memory actuator assembly according to at least one of the preceding claims, wherein an end piece of the wire-type shape-memory element (2) is connected to the first deflecting body (3) or the second deflecting body (4) in non-positive fit and/or positive fit and/or as a material bond.

11. Shape-memory actuator assembly according to at least one of the preceding claims, wherein at least one part section of the actuator assembly (5) is embedded into an actuator potting element (12) between the first deflecting body (3) and the second deflecting body (4).

12. Assembly method for producing a shape-memory actuator assembly, comprising the method steps: Multiple winding of an assembly with a first deflecting body (3) and a second deflecting body (4), which are arranged spaced apart from one another, with a wire-type shape-memory element (2) for forming an actuator assembly (5); and embedding into a potting compound (7.1, 7.2) of at least one wire holder region (6) at the respective deflecting body (3, 4), and at the sections of the wire-type shape-memory element (2) which are in contact with the wire holder region (6).

13. Assembly method according to claim 12, wherein the embedding into the potting compound (7.1, 7.2) is carried out in such a way that the deflecting bodies (3, 4) are entirely enclosed by the potting compound (7.1, 7.2).

14. Assembly method according to any one of claims 12 or 13, wherein, after the winding with the wire-type shape-memory element (2), the first deflecting body (3) and the second deflecting body (4) are introduced into an assigned potting compound pot (8.1, 8.2), which is filled with the potting compound (7.1, 7.2), wherein the potting compound (7.1, 7.2) mechanically couples the deflecting body (3, 4) to the assigned potting compound pot (8.1, 8.2) in order to transfer actuator forces.

15. Assembly method according to any one of claims 12 - 14, wherein, after the winding with the wire-type shape-memory element (2) and before the embedding into the potting compound (7.1, 7.2), a clamping piece (11.1, 11.2) is located onto the first deflecting body (3) and onto the second deflecting body (4), for fixing the sections of the wire-type shape-memory element (2) which are in contact with the wire holder region (6).

16. Assembly method according to any one of claims 12 - 15, wherein at least one part section of the actuator assembly (5) is embedded into an actuator potting element (12) between the first deflecting body (3) and the second deflecting body (4).

## Revendications

1. Système d'actionnement à mémoire de forme, comprenant un élément à mémoire de forme (2) filiforme ; un premier corps de renvoi (3) et un second corps de renvoi (4) placés à distance l'un de l'autre, l'élément à mémoire de forme (2) filiforme étant enroulé plusieurs fois autour du premier corps de renvoi (3) et du second corps de renvoi (4) et en réalisant entre ceux-ci un agencement à actionneur (5) ; **caractérisé en ce qu'**au moins une zone de maintien du fil (6) sur chaque corps de renvoi (3, 4) et les tronçons de l'élément à mémoire de forme (2) filiforme en contact avec la zone de maintien du fil (6) sont incorporés dans une masse de scellement (7.1, 7,2).

2. Système d'actionnement à mémoire de forme selon la revendication 1, où un boîtier de scellement (8.1, 8.2) est affecté respectivement au premier corps de renvoi (3) et au second corps de renvoi (4), la masse de scellement (7.1, 7.2) couplant mécaniquement chaque corps de renvoi (3, 4) avec le boîtier de scellement respectif (8.1, 8.2) afin de transmettre les forces d'actionnement.

3. Système d'actionnement à mémoire de forme selon au moins une des revendications précédentes, où la masse de scellement (7.1, 7.2) comprend une résine composite ou une colle bi-composants ou un polymère durcissant aux UV.

4. Système d'actionnement à mémoire de forme selon au moins une des revendications précédentes, où la masse de scellement (7.1, 7.2) englobe complètement chaque corps de renvoi (3, 4).

5. Système d'actionnement à mémoire de forme selon la revendication 2, où le boîtier de scellement (8.1, 8.2) comprend un élément de fixation (9.1, ..., 9.4) pour évacuer les forces d'actionnement.

6. Système d'actionnement à mémoire de forme selon au moins une des revendications précédentes, où la zone de maintien du fil (6) est un isolateur électrique et/ou la masse de scellement (7.1, 7.2) est électriquement isolante.

7. Système d'actionnement à mémoire de forme selon la revendication 6, où la zone de maintien du fil (6) comporte des logements pour le fil (10.1, ..., 10.n) en forme de rainure.

8. Système d'actionnement à mémoire de forme selon au moins une des revendications précédentes, où une pièce de serrage (11.1, 11.2) incorporée dans la masse de scellement (7.1, 7.2) est respectivement disposée sur le premier corps de renvoi (3) et sur le second corps de renvoi (4), laquelle est conformée afin de fixer les tronçons en contact avec la zone de maintien du fil (6) de l'élément à mémoire de forme (2) filiforme.

9. Système d'actionnement à mémoire de forme selon la revendication 8, où la pièce de serrage (11.1, 11.2) est un isolateur électrique.

10. Système d'actionnement à mémoire de forme selon au moins une des revendications précédentes, où une pièce d'extrémité de l'élément à mémoire de forme (2) filiforme est solidarisée par complémentarité mécanique et/ou par complémentarité de forme et/ou par complémentarité de matière ave le premier corps de renvoi (3) ou avec le second corps de renvoi (4).

11. Système d'actionnement à mémoire de forme selon au moins une des revendications précédentes, où au moins un tronçon partiel de l'agencement à actionneur (5) est incorporé dans un élément de scellement d'actionneur (12) entre le premier corps de renvoi (3) et le second corps de renvoi (4).

12. Procédé de montage pour fabriquer un système d'actionnement à mémoire de forme comprenant les étapes de procédé : Plusieurs enroulements d'un agencement comportant un premier corps de renvoi (3) et un second corps de renvoi (4), placés à distance l'un de l'autre, avec un élément à mémoire de forme (2) filiforme, afin de réaliser un agencement à actionneur (5) ; et incorporation dans une masse de scellement (7.1, 7.2) d'au moins une zone de maintien du fil (6) sur son corps de renvoi (3, 4) respectif et des tronçons en contact avec la zone de maintien du fil (6) de l'élément à mémoire de forme (2) filiforme.

13. Procédé de montage selon la revendication 12, où l'incorporation dans la masse de scellement (7.1, 7.2) est réalisée de telle sorte que le corps de renvoi (3, 4) est totalement englobé par la masse de scellement (7.1, 7.2).

14. Procédé de montage selon l'une des revendications 12 ou 13, où le premier corps de renvoi (3) et le second corps de renvoi (4) sont, après l'enroulement de l'élément à mémoire de forme (2) filiforme, respectivement mis en place dans la boîte de scellement (8.1, 8.2) qui leur est affectée, laquelle est remplie de masse de scellement (7.1, 7.2), la masse de scellement (7.1, 7.2) couplant mécaniquement le corps de renvoi (3, 4) avec le boîtier de scellement (8.1, 8.2) qui lui est affecté afin de transmettre les forces d'actionnement.

15. Procédé de montage selon l'une des revendications 12 à 14, où une pièce de serrage (11.1, 11.2) est placée sur le premier corps de renvoi (3) et sur le second corps de renvoi (4), après l'enroulement de l'élément à mémoire de forme (2) filiforme et avant l'incorporation dans la masse de scellement (7.1, 7.2) afin de fixer les tronçons de l'élément à mémoire de forme (2) filiforme en contact avec la zone de maintien du fil (6).

16. Procédé de montage selon l'une des revendication 12 à 15, où au moins un tronçon partiel de l'agencement à actionneur (5) est incorporé dans un élément de scellement d'actionneur (12) entre le premier corps de renvoi (3) et le second corps de renvoi (4).
